(19) **Europäisches Patentamt / European Patent Office / Office européen des brevets**

(11) **EP 3 671 399 B1**

(12) # FASCICULE DE BREVET EUROPEEN

(45) Date de publication et mention de la délivrance du brevet:
**05.01.2022 Bulletin 2022/01**

(21) Numéro de dépôt: **19218815.9**

(22) Date de dépôt: **20.12.2019**

(51) Int Cl.:
**G05D 23/19** *(2006.01)*    **F24H 9/20** *(2006.01)*
**H02J 3/00** *(2006.01)*

(54) **PROCEDE DE DETERMINATION D'UNE CONSIGNE MINIMALE PREFERENTIELLE DE PUISSANCE, PROCEDE DE PILOTAGE D'UNE PLURALITE DE CHAUFFE-EAUX ET DISPOSITIF ASSOCIE**

BESTIMMUNGSVERFAHREN EINES BEVORZUGTEN MINIMALEN LEISTUNGSSOLLWERTS, STEUERUNGSVERFAHREN EINER VIELZAHL VON WASSERBOILERN UND ENTSPRECHENDE VORRICHTUNG

METHOD FOR DETERMINING A PREFERENTIAL MINIMUM POWER SETTING, METHOD FOR CONTROLLING A PLURALITY OF WATER HEATERS AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873783**

(43) Date de publication de la demande:
**24.06.2020 Bulletin 2020/26**

(73) Titulaire: **Commissariat à l'Energie Atomique et aux Energies Alternatives**
**75015 Paris (FR)**

(72) Inventeurs:
• **HA, Duy Long**
  **38054 GRENOBLE CEDEX 9 (FR)**
• **AL SHAKARCHI, Franck**
  **38054 GRENOBLE CEDEX 9 (FR)**

(74) Mandataire: **Cabinet Camus Lebkiri**
**25 rue de Maubeuge**
**75009 Paris (FR)**

(56) Documents cités:
**EP-A1- 3 128 635          WO-A1-2014/051634**
**WO-A1-2014/055059**

EP 3 671 399 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE DE L'INVENTION**

Le domaine technique de l'invention est celui du pilotage de la consommation d'eau chaude à des fins de maximisation de l'autoconsommation d'énergie renouvelable. Plus particulièrement, l'invention concerne un procédé de détermination d'une consigne minimale préférentielle de puissance ainsi qu'un procédé de pilotage d'une pluralité de chauffe-eaux sur un réseau comportant une pluralité de consommateurs i. Elle concerne également un dispositif mettant en oeuvre de tels procédés.

**ARRIERE-PLAN TECHNOLOGIQUE DE L'INVENTION**

Dans le cadre de la production électrique renouvelable, par exemple à l'aide de panneau photovoltaïque, il est connu de piloter individuellement chaque installation de sorte à satisfaire la demande de chaque consommateur tout en maximisant la consommation de l'énergie produite localement. Cependant, il peut être avantageux de gérer la production, non plus de manière individuelle, mais de manière collective en répartissant l'énergie produite localement entre différents consommateurs en fonction des besoins. A cette fin, il est possible de compléter l'installation par des batteries ou toute autre forme de stockage de sorte à maximiser l'utilisation de l'énergie produite localement. Cependant, afin de limiter l'usage de batterie, il est également possible d'utiliser les équipements électriques de production d'eau chaude en assimilant ces derniers soit à une charge électrique qui va donc consommer de l'énergie, soit à un moyen de stockage de la chaleur (ou moyen de stockage thermique) qui va donc stocker de l'énergie. Un tel système peut donc être piloté à l'aide de deux consignes : l'activation ou la désactivation de la consommation électrique lié au chauffage de l'eau ou une consigne de température de l'eau chaude.

De manière générale, les chauffe-eaux électriques peuvent présenter plusieurs compartiments ou plusieurs résistances positionnés à différentes hauteurs du chauffe-eau, de manière à apporter de la modularité dans le chauffage de l'eau et à fournir la possibilité de piloter la consommation et la température pour des volumes d'eau différents. Lorsque l'on cherche à optimiser la production et la consommation d'eau chaude, il est nécessaire de prendre en compte les prévisions de production ou de consommation ainsi que des informations concernant l'état de chaque consommateur (nombre d'occupant associé au consommateur, consommation d'eau chaude passée, etc.). De plus, il est nécessaire de tenir compte de la notion de besoin et de confort.

Pour cela, les compteurs communicants modernes, tels que le compteur Linky, permettent de communiquer en temps réel la consommation électrique à des fins de pilotage intelligent des installations électriques. Par exemple, le document FR 3 033 394 A1 présente un système de gestion de chauffe-eau avec une installation photovoltaïque dédiée qui permet d'absorber l'énergie produite par les panneaux photovoltaïques sous forme thermique dans le ou les chauffe-eaux de l'installation. Le système utilise en outre les prévisions météorologiques de sorte à déterminer si le chauffe-eau doit utiliser l'énergie fournie par les panneaux photovoltaïques (charge diurne) ou au contraire utiliser l'énergie du réseau auquel est relié le système (charge nocturne). De même le système est présenté dans « Using Electric Water Heaters (EWHs) for Power Balancing and Frequency Control in PV-Diesel Hybrid Mini-GridsK » ; Elamari et al, World Energy Renewable Congress 2011, Sweden qui décrit une stratégie de gestion des chauffe-eau dans le cadre de la gestion de fréquence dans un microréseau.

Le document WO2014/055059 divulgue un procédé de détermination d'une consigne minimale préférentielle de puissance par un consommateur, ledit consommateur comprenant un radiateur.

De manière générale, le pilotage d'une installation peut donc se faire de deux manières différentes. La première repose sur une répartition équilibrée. Elle présente l'avantage de ne nécessiter que peu de données, mais elle ne permet pas un pilotage optimal, c'est-à-dire un pilotage maximisant la consommation de l'énergie produite localement. La deuxième repose sur une répartition optimale calculée à l'aide de méthodes mathématiques issues de la recherche opérationnelle nécessitant la prévision de la consommation électrique des différents consommateurs ainsi que la prévision de production locale. Elle repose donc sur des prévisions consistant en de longues séries de données sur toute une période de production/consommation (typiquement une journée) qui présentent souvent un niveau d'erreur non négligeable entrainant soit une insatisfaction du consommateur en termes de confort et/ou de besoin, soit un pilotage sous-optimal.

Il existe donc un besoin d'un procédé permettant d'obtenir un pilotage optimal sans pour autant avoir recours à des séries de données complexes.

**RESUME DE L'INVENTION**

L'invention offre une solution aux problèmes évoqués précédemment, en proposant un procédé de pilotage ne nécessitant pas de prévisions de production, mais générant des consignes en se basant sur des données relatives la période de production en cours.

Pour cela, un premier aspect de l'invention concerne un procédé de détermination d'une consigne minimale préférentielle de puissance par un consommateur i, ledit consommateur comprenant un chauffe-eau électrique, ledit procédé comprenant :

- une étape de détermination de l'état du consommateur i à un instant k ;

- une étape de détermination d'une consigne minimale de puissance $P_c^{min}(i, k)$ à l'instant k en fonction de l'état du consommateur i déterminé lors de l'étape de détermination de l'état du consommateur i à un instant k ;

- une étape de détermination d'une consigne minimale de puissance $P_c^{min}(i, k + 1: K)$ aux instants k + 1 à K en fonction d'un état du consommateur i prévisionnel estimé à partir de l'état du consommateur i déterminé lors de l'étape de détermination de l'état du consommateur i à un instant k ;

- une étape de détermination d'une consigne minimale préférentielle de puissance $P_c^{min\_pref}(i, k)$ en fonction de la consigne minimale de puissance $P_c^{min}(i, k)$ à l'instant k et de la consigne minimale de puissance $P_c^{min}(i, k + 1: K)$ aux instants k + 1 à K.

Ainsi aucune prévision de production n'est nécessaire à la détermination d'un consigne de pilotage, cette détermination s'effectuant sur la base de données relatives la période de production en cours.

Dans un mode de réalisation, l'étape de détermination de l'état du consommateur i à l'instant k comprend :

- une sous-étape d'acquisition de la puissance P(i,k) consommée par le chauffe-eau du consommateur i à l'instant k ;
- une sous-étape de détermination du nombre de personnes Per(i,k) à l'instant k associé audit consommateur i.

Dans un mode de réalisation, l'étape de détermination de la consigne minimale de puissance $P_c^{min}(i, k)$ à l'instant k comprend :

- une sous-étape de détermination de la quantité d'eau chaude minimale $Eau_{min}(i, 1: k)$ nécessaire à l'instant k en fonction du nombre de personnes Per(i, k) associé au consommateur i ;

- une sous-étape de détermination d'une consigne minimale de puissance $P_c^{min}(i, k)$ à l'instant k en fonction de la quantité d'eau chaude $Eau_{min}(i, 1: k)$ nécessaire à l'instant k déterminée à la sous-étape précédente.

Dans un mode de réalisation, l'étape de détermination de la consigne minimale de puissance $P_c^{min}(i, k + 1: K)$ aux instants k + 1 à K comprend :

- une sous-étape de détermination de la quantité d'eau chaude prévisionnel $Eau^{prev}(i, k + 1: K)$ consommée aux instants k + 1 à K en fonction d'un nombre de personnes associé audit consommateur i $Per^{+1}(i, k+ 1, K)$ dans lequel $Per^{+1}(i, k) = min(Per(i, k) + 1, N_i)$ avec $N_i$ le nombre maximal de personnes associé audit consommateur i ;

- une sous-étape de détermination de la consigne minimale de puissance $P_c^{min}(i, k + 1: K)$ aux instants k + 1 à K en fonction de la quantité d'eau chaude prévisionnel $Eau^{prev}(i, k + 1: K)$ déterminée lors de la sous-étape précédente.

Un deuxième aspect de l'invention concerne un procédé de pilotage d'une pluralité de chauffe-eaux sur un réseau comportant une pluralité de consommateurs i, chaque consommateur i de la pluralité de consommateurs i comprenant un chauffe-eau de la pluralité de chauffe-eaux, ledit procédé comprenant :

- une étape de réception, pour chaque consommateur i de la pluralité de consommateurs i, d'une consigne minimale préférentielle de puissance $P_c^{min\_pref}(i, k)$ ;
- pour chaque consommateur i de la pluralité de consommateurs i, une étape de détermination d'une consigne de puissance $P_c(i,k)$ à l'instant k en fonction de la consigne minimale préférentielle de puissance $P_c^{min\_pref}(i, k)$.

Dans un mode de réalisation, le procédé selon un deuxième aspect de l'invention comprend, avant étape de réception, pour chaque consommateur i de la pluralité de consommateurs i, une étape de mise en oeuvre d'un procédé selon un premier aspect de l'invention de sorte à obtenir, pour chaque consommateur i, une consigne minimale préférentielle de puissance $P_c^{min\_pref}(i, k)$.

Dans un mode de réalisation, l'étape de détermination d'une consigne de puissance $P_c(i, k)$ à l'instant k comprend :

- une sous-étape de détermination de la modulation électrique optimale à l'instant k ;
- une sous-étape de détermination d'une consigne de puissance optimale $P_c^{opt}(i, k)$ correspondant à la répartition de la modulation parmi chaque consommateur i, ladite répartition étant effectuée proportionnellement aux consignes minimales préférentielle $P_c^{min\_pref}(i, k)$ ;
- une sous-étape de détermination de la consigne de puissance $P_c(i, k)$, ladite consigne de puissance $P_c(i, k)$ à l'instant k étant égale au maximum entre la consigne de puissance optimale $P_c^{opt}(i, k)$ et la consigne minimale préférentielle $P_c^{min\_pref}(i, k)$.

Dans un mode de réalisation, l'étape de détermination d'une consigne de puissance $P_c(i, k)$ à l'instant k comprend :

- une sous-étape de détermination de la modulation électrique optimale à l'instant k ;
- une sous-étape de détermination d'une consigne de puissance optimale $P_c^{opt}(i, k)$ correspondant à la maximisation de la relation suivante :

$$\sum S(i, k) \times n(i, k)$$

où S(i, k) est la satisfaction du consommateur i à l'instant k avec S = 1 lorsque la satisfaction est maximale et S = 0 lorsque la satisfaction est minimale et n(i,k) le rendement d'utilisation de la puissance déterminé à l'aide de la formule suivante :

$$n(i, k) = \begin{cases} \dfrac{P_c^{opt}(i, k)}{P(i, k)} & \text{si } P(i, k) > 0 \\ 0 & \text{si } P(i, k) = 0 \end{cases}$$

- une sous-étape de détermination de la consigne de puissance $P_c(i, k)$, ladite consigne de puissance $P_c(i, k)$ à l'instant k étant égale au maximum entre la consigne de puissance optimale $P_c^{opt}(i, k)$ et la consigne minimale préférentielle $P_c^{min\_pref}(i, k)$.

Un troisième aspect de l'invention concerne un dispositif comprenant des moyens pour mettre en oeuvre un procédé selon un premier ou un deuxième aspect de l'invention.

Un quatrième aspect de l'invention concerne un programme d'ordinateur comprenant des instructions qui conduisent le dispositif selon un troisième aspect de l'invention à exécuter les étapes du procédé selon un premier ou un deuxième aspect de l'invention.

Un cinquième aspect de l'invention concerne un support lisible par ordinateur, sur lequel est enregistré le programme d'ordinateur selon un quatrième aspect de l'invention.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

[Fig. 1] montre un ordinogramme d'un procédé selon un premier aspect de l'invention.

[Fig. 2] montre un ordinogramme d'un procédé selon un deuxième aspect de l'invention.

**DESCRIPTION DETAILLEE**

Sauf précision contraire, un même élément apparaissant sur des figures différentes présente une référence unique.

Dans la suite, la notation détaillée ci-après sera utilisée.

Chaque consommateur est associé à un index i, ledit index étant tel que $i \in [1, I]$, avec I le nombre de consommateurs total.

Chaque plage de temps de la période de production/consommation est associée à un indice k, ledit indice étant tel que $k \in [1, K]$, avec K le nombre total de plages de temps durant la période de production/consommation. De plus, chaque plage de temps a une durée de temps $\Delta$ de sorte que $K \times \Delta$ est égal à la durée de la période de production/consommation. Dans la suite, l'expression « instant k » sera utilisée pour désigner la plage de temps k. Par exemple, $\Delta$ peut être égal à une minute et $K$ égal à 1440, ce qui correspond à une période de production de 24h. L'instant $k$ doit être compris comme l'instant durant lequel est déterminé l'état du consommateur et durant lequel est établie la consigne à l'aide d'un procédé selon l'invention.

La puissance consommée par le chauffe-eau du consommateur i à l'instant k est noté P(i, k). De plus, la puissance consommée par le chauffe-eau du consommateur i entre les instants $k_1$ et $k_2$ est noté $P(i, k_1: k_2)$ et correspond à un vecteur dont les coordonnées sont la puissance consommée par le chauffe-eau du consommateur! durant les instants $k_1$ à $k_2$. Par exemple, le vecteur $P(i, 1:3)$ est équivalent au vecteur $(P(i, 1), P(i, 2), P(i, 3))$.

La température du chauffe-eau du consommateur i à l'instant k est notée T(i, k). De plus, la température du chauffe-eau du consommateur i entre les instants $k_1$ et $k_2$ est noté $T(i, k_1: k_2)$ (il s'agit là encore d'un vecteur).

La puissance de consigne donnée au chauffe-eau du consommateur i à l'instant k est notée $P_c(i, k)$. De plus, la puissance de consigne donnée au chauffe-eau du consommateur i entre les instants $k_1$ et $k_2$ est noté $P_c^{min}(i, k_1: k_2)$ (il s'agit là encore d'un vecteur).

Le nombre de personnes associé à un consommateur i à l'instant k est noté Per(i, k). Ce nombre de personnes est toujours tel que $0 \leq Per(i, k) \leq N_i$, avec $N_i$ le nombre de personnes maximal associé au consommateur i. De plus, nombre de personnes associé au du consommateur i entre les instants $k_1$ et $k_2$ est noté $Per(i, k_1: k_2)$ (il s'agit là encore d'un vecteur).

La quantité d'eau chaude consommée par le consommateur i durant la plage de temps k est notée Eau(i, k). De plus, la quantité d'eau chaude consommée par le consommateur i entre les instants $k_1$ et $k_2$ est notée $Eau(i, k_1: k_2)$ (il s'agit là encore d'un vecteur).

La quantité d'eau chaude minimale nécessaire pour le consommateur! à l'instant k est notée $Eau_{min}(i, k)$.

La quantité totale d'eau dans le ballon d'eau chaude quand ce dernier est plein du consommateur $i$ est notée $V_{total}(i)$.

La température de l'eau froide à l'entrée du ballon d'eau chaude du consommateur i à l'instant $k$ est notée $T_{eaufroide}(i, k)$.

Le facteur de conversion de la puissance électrique en puissance thermique relative au chauffe-eau du consommateur i est noté $R(i)$.

La température ambiante du local de ballon de l'eau chaude associé au consommateur $i$ à l'instant $k$ est notée $T_{amb}(i, k)$.

Le facteur de dispersion thermique entre le ballon et la température ambiance associé au consommateur i est noté $Loss_{facteur}(i)$.

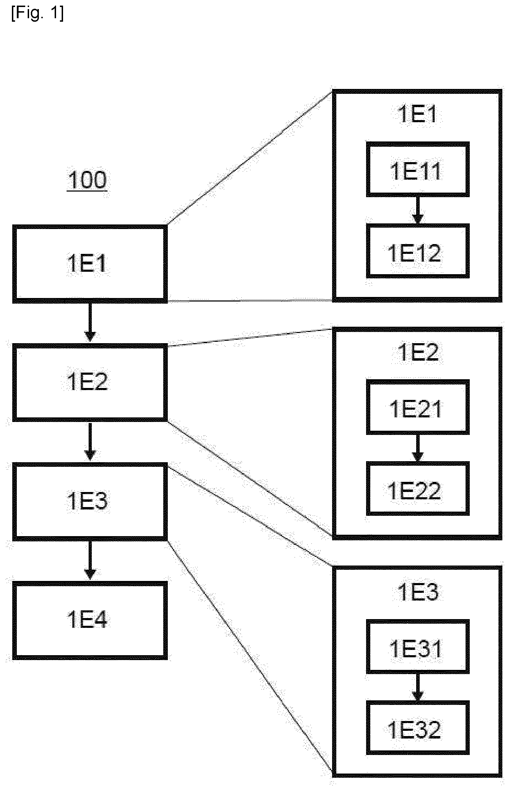

Un premier aspect de l'invention illustré à la figure 1 concerne un procédé 100 de détermination d'une consigne minimale préférentielle de puissance par un consommateur i, ledit consommateur comprenant un chauffe-eau électrique. L'eau chaude du chauffe-eau peut notamment être utilisée pour les sanitaires, pour l'air conditionné et/ou le chauffage. Le procédé vise donc à déterminer (pour éventuellement la fournir à un système de gestion) une valeur de consigne à respecter pour une bonne gestion du chauffe-eau d'un consommateur i donné.

Pour cela, le procédé 100 selon un premier aspect de l'invention comporte, une étape 1E1 de détermination de l'état du consommateur i à l'instant k. L'état d'un consommateur peut comporter la puissance consommée par le chauffe-eau P(i,k). Il peut également comporter le nombre de personnes Per(i, k) associé au consommateur i à l'instant k. En effet, chaque consommateur i peut correspondre à un foyer ou plus généralement à un bâtiment, c'est-à-dire à une ou plusieurs personnes. Bien entendu, la puissance consommée par le chauffe-eau P(i, k) du consommateur i va donc dépendre du nombre de personnes Per(i, k) présentes à chaque instant k.

Dans un mode de réalisation, étape 1E1 de détermination de l'état du consommateur i à l'instant k comprend une sous-étape 1E11 d'acquisition de puissance P(i, k) consommée par le chauffe-eau du consommateur i à l'instant k. Cette acquisition peut par exemple se faire à l'aide d'un compteur communicant. A l'issue de cette sous-étape 1E11, la puissance P(i, k) consommée par le chauffe-eau du consommateur i à l'instant k est connue.

Dans un mode de réalisation, l'étape 1E1 de détermination de l'état du consommateur! comprend également une sous-étape 1E12 de détermination du nombre de personnes Per(i, k) à l'instant k associé au consommateur i. Le nombre de personnes associé au consommateur i peut par exemple être déterminé par une mesure de la quantité de $CO_2$. On pourra également déterminer ce nombre à partir de données de géolocalisation obtenues à l'aide d'un smartphone (ou ordiphone). On pourra aussi utiliser d'autres informations par exemple les horaires de travail dans le cas d'une entreprise ou bien alors une combinaison desdites informations. A l'issue de cette sous-étape 1E12, le nombre de personnes Per(i, k) associé au consommateur i à l'instant k est connu.

A l'issue de l'étape 1E1 de détermination de l'état du consommateur i à l'instant k, on connait le nombre de personnes Per(i, k) ainsi que la puissance consommée P(i, k) par le chauffe-eau à l'instant k associés audit consommateur i.

Une fois l'état du consommateur i connu, il est possible d'évaluer les besoins du consommateur i à l'instant k et de déterminer une consigne de puissance minimale $P_c^{min}(i, k)$ pour le chauffe-eau du consommateur i à l'instant k. Pour cela, le procédé 100 comporte en outre, une étape 1E2 de détermination d'une consigne minimale de puissance $P_c^{min}(i, k)$ à l'instant k en fonction de l'état du consommateur i déterminé lors de l'étape 1E1 de détermination de l'état du consommateur i à un instant k.

Dans un mode de réalisation, l'étape 1E2 de détermination d'une consigne minimale de puissance $P_c^{min}(i, k)$ à l'instant k comprend une sous-étape 1E21 de détermination de la quantité d'eau chaude minimale $Eau_{min}(i,k)$ nécessaire à l'instant k en fonction du nombre de personnes Per(i, k) associé au consommateur i. Dans un mode de réalisation, la quantité d'eau chaude $Eau_{min}(i, k)$ associée au consommateur i est déterminé en prenant en compte les préférences de chaque personne présente.

L'étape 1E2 de détermination de la consigne minimale de puissance $P_c^{min}(i, k)$ à l'instant k comprend également une sous-étape 1E22 de détermination d'une consigne minimale de puissance $P_c^{min}(i, k)$ à l'instant k en fonction de la quantité d'eau chaude minimale $Eau_{min}(i, k)$ nécessaire à l'instant k déterminée à la sous-étape 1E21 précédente.

Dans un mode de réalisation, la consigne de puissance minimale $P_c^{mim}(i, k)$ à l'instant k est donnée par la formule suivante :

$$P_c^{mim}(\text{i, k}) = \frac{\frac{T_{eau(i,k)}}{\Delta} + (T_{eau(i,k-1)} - T_{amb(i,k)}) \times Loss_{facteur}(i) - \frac{T_{eau(i,k-1)} \times (V_{total}(i) - Eau_{min}(i,k)) + T_{eaufroide(i,k)} \times Eau_{min}(i,k)}{V_{total}(i)}}{R(i)}$$

Le facteur de conversion de la puissance électrique en puissance thermique $R(i)$ et/ou le facteur de dispersion thermique entre le ballon et la température ambiance $Loss_{facteur}(i)$ peuvent être déterminés à partir de mesures et/ou fournis par le fabricant du chauffe-eau.

Dans un mode de réalisation, lorsque la température d'eau froide à l'entrée du ballon $T_{eaufroide}(i,k)$ n'est pas connue (par exemple, aucun capteur n'est présent), la valeur de cette température peut être choisie comme étant égale à une valeur prédéterminée, par exemple 15°C en été et 12°C en hiver.

Dans un mode de réalisation, lorsque la température ambiante du local de ballon de l'eau chaude $T_{amb}(i, k)$ associée au consommateur *i* n'est pas connue (par exemple, aucun capteur n'est présent), la valeur de cette température peut être choisie comme étant égale à une valeur prédéterminée, par exemple égale à 22°C.

Le procédé 100 comporte ensuite, une étape 1E3 de détermination d'une consigne minimale de puissance $P_c^{min}(i, k + 1 : K)$ aux instants k + 1 à K.

Dans un mode de réalisation, étape 1E3 de détermination d'une consigne minimale de puissance $P_c^{min}(i, k + 1: K)$ aux instants k + 1 à K comprend une sous-étape 1E31 de détermination de la quantité d'eau chaude prévisionnelle $Eau^{prev}(i, k + 1: K)$ consommée aux instants k + 1 à K en fonction du nombre de personnes associé audit consommateur plus une personne (c'est-à-dire Per(i,k) + 1 si Per(i,k) + 1 < $N_i$ ou $N_i$ dans le cas contraire) aux instants k + 1 à K, noté $Per^{+1}(i, k + 1: K)$ dans la suite. Autrement dit, il s'agit de déterminer la quantité nécessaire d'eau chaude en faisant l'hypothèse que le nombre de personnes associé au consommateur i à un instant k est égal à $Per^{+1}(i, k) = min(Per(i, k) + 1, N_i)$.

Dans un mode de réalisation, la température T(i, k) de l'eau chaude est également prise en compte lors de la sous-étape de détermination de la quantité d'eau chaude prévisionnelle $Eau^{prev}(i, k + 1: K)$ aux instants k + 1 à K.

Dans un mode de réalisation, les coefficients de la quantité d'eau chaude prévisionnelle $Eau^{prev}(i, k + 1: K)$ peuvent être déterminés à l'aide de la formule suivante :

$$Eau^{prev}(i, k') = \frac{Eau_{moy}(i) \times Per^{+1}(i,k) - \sum_{k''=1}^{k'} Eau(i,k'')}{(K-k') \times \Delta}$$
$$\forall k' \in [k + 1, K]$$

où $Eau_{moy}(i)$ est la quantité d'eau moyenne consommée par le consommateur *i* sur une période donnée, par exemple la période de production (par exemple déterminée à partir de données issues des périodes de production précédentes).

Par exemple, $Eau^{prev}(i, 3: 5) = [Eau^{prev}(i, 3), Eau^{prev}(i, 4), Eau^{prev}(i, 5)]$.

Dans un mode de réalisation, la sous-étape 1E31 de détermination de la quantité d'eau chaude prévisionnelle $Eau^{prev}(i, k + 1: K)$ consommée aux instants k + 1 à K comprend une phase de détermination d'une heure d'arrivée de la personne supplémentaire, la quantité d'eau chaude prévisionnelle $Eau^{prev}(i, k + 1: K)$ étant alors déterminée en fonction de ladite heure d'arrivée. L'heure d'arrivée prévisionnelle peut être déterminée par une méthode d'apprentissage, en fonction des heures d'arrivée effectives précédemment enregistrées. De manière alternative ou complémentaire, l'heure d'arrivée prévisionnelle peut être déterminée en fonction d'horaires de travails ou tout autre information concernant l'emploi du temps de la ou des personnes associées au consommateur *i* considéré. De manière alternative ou complémentaire, l'heure d'arrivée prévisionnelle peut être déterminée à l'aide d'information de géolocalisation concernant les personnes associées au consommateur *i* considéré.

Dans un mode de réalisation, l'étape 1E3 de détermination d'une consigne minimale de puissance $P_c^{min}(i, k + 1: K)$ aux instants k + 1 à K comprend également une sous-étape 1E32 de détermination de la consigne minimale de puissance $P_c^{min}(i, k + 1: K)$ aux instants k + 1 à *K* en fonction de la quantité d'eau chaude prévisionnelle $Eau^{prev}(i, k + 1: K)$ consommée aux instants k + 1 à K déterminée lors de la sous-étape 1E31 précédente.

Dans un mode de réalisation, les coefficients de la consigne minimale de puissance $P_c^{min}(i, k + 1: K)$ aux instants k + 1 à K peuvent être calculés à l'aide de la formule suivante :

$$P_c^{mim}(i, k') =$$
$$\frac{\frac{T_{eau}(i,k')}{\Delta} + \left(T_{eau}(i,k'-1) - T_{amb}(i,k')\right) \times Loss_{facteur}(i) - \frac{T_{eau}(i,k'-1) \times \left(V_{total}(i) - Eau^{prev}(i,k')\right) + T_{eaufroide}(i,k') \times Eau^{prev}(i,k')}{V_{total}(i)}}{R(i)}$$
$$\forall k' \in [k + 1, K]$$

Dans un mode de réalisation, la température $T_{eau}(i, k'+1)$ est calculée de manière itérative à partir de $T_{eau}(i, k')$.

Le procédé selon un premier aspect de l'invention comporte également, une étape 1E4 de détermination de la consigne minimale préférentielle de puissance $P_c^{min\_pref}(i, k)$ en fonction la consigne minimale de puissance $P_c^{min}(i, k)$ à l'instant k et de la consigne minimale de puissance $P_c^{min}(i, k + 1: K)$ aux instants k + 1 à K.

Dans un mode de réalisation, la consigne minimale préférentielle de puissance $P_c^{min\_pref}(i, k)$ est donnée

par la formule suivante :

$$P_c^{min\_pref}(i, k) = max\left(P_c^{min}(i, k), P_c^{min}(i, k + 1:K)\right)$$

A l'issue du procédé 100 selon un premier aspect de l'invention, il est possible d'obtenir, pour un consommateur i donné, une consigne minimale préférentielle de puissance $P_c^{min\_pref}(i, k)$ permettant de répondre aux besoins dudit consommateur en matière d'eau chaude. Il est ensuite possible d'utiliser cette information pour optimiser la gestion d'une pluralité de chauffe-eaux compte tenu des ressources en énergie électrique.

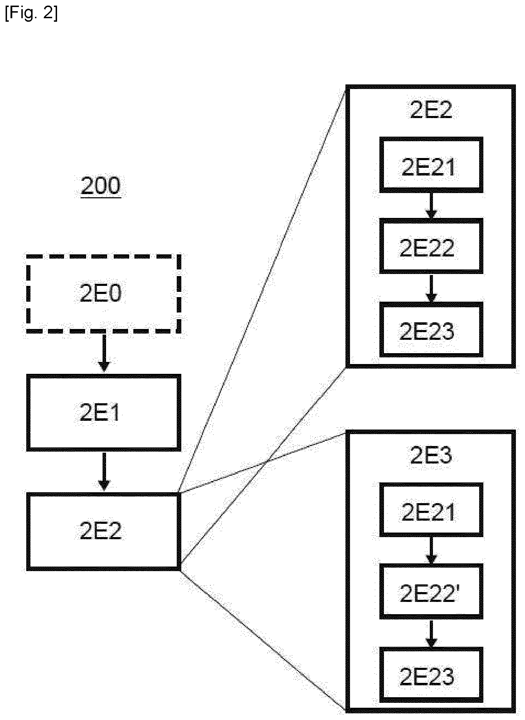

Pour cela, un deuxième aspect de l'invention illustré à la figure 2 concerne un procédé 200 de pilotage d'une pluralité de chauffe-eaux sur un réseau comportant une pluralité de consommateurs i, chaque consommateur i de la pluralité de consommateurs i comprenant un chauffe-eau de la pluralité de chauffe-eau. Le procédé vise à piloter les chauffe-eaux de sorte à optimiser la consommation en énergie électrique, par exemple pour tenir compte de la présence d'une source d'énergie électrique intermittente comme des panneaux photovoltaïques ou une éolienne. Plus particulièrement, le procédé vise à déterminer, pour chaque consommateur i, une consigne de puissance optimale à l'instant k noté $P_c(i, k)$.

Le procédé 200 selon un deuxième aspect de l'invention comprend une étape 2E1 de réception, en provenance de chaque consommateur! de la pluralité de consommateurs i, d'une consigne minimale préférentielle de puissance $P_c^{min\_pref}(i, k)$. D'autres données peuvent éventuellement être reçues lors de cette étape, par exemple des données concernant l'état de chaque consommateur i.

A cette fin, dans un mode de réalisation, le procédé selon un deuxième aspect de l'invention comprend, avant étape 2E1 de réception, pour chaque consommateur i de la pluralité de consommateurs i, une étape 2E0 de mise en oeuvre d'un procédé 100 selon un premier aspect de l'invention, de sorte à obtenir, pour chaque consommateur i, une consigne minimale préférentielle de puissance $P_c^{min\_pref}(i, k)$. Une fois le procédé 100 selon le premier aspect de l'invention mis en oeuvre, les consommateurs peuvent faire parvenir les consignes minimales préférentielles de puissance à un système de pilotage, ces dernières étant alors réceptionnées au cours de l'étape 2E1 de réception. D'autres données peuvent éventuellement être transmises au système de pilotage lors de cette étape, par exemple des données concernant l'état de chaque consommateur i. Une telle communication peut par exemple utiliser les CPL (pour courants porteurs en ligne) ou bien encore des moyens de communication sans-fils. Ces consignes minimales préférentielles de puissance $P_c^{min\_pref}(i, k)$ peuvent ensuite être utilisées pour déterminer des consignes optimisées (par exemple pour favoriser l'utilisation de l'énergie électrique produite localement) à chaque consommateur i.

Pour cela, le procédé selon un deuxième aspect de l'invention comprend, pour chaque consommateur i de la pluralité de consommateurs i, une étape 2E2 de détermination d'une consigne de puissance $P_c(i,k)$ à l'instant k en fonction de la consigne minimale préférentielle de puissance $P_c^{min\_pref}(i, k)$.

Dans un mode de réalisation, l'étape 2E2 de détermination d'une consigne de puissance $P_c(i, k)$ à l'instant k comprend une sous-étape 2E21 de détermination de la modulation électrique optimale à l'instant k. Par exemple, la modulation électrique optimale est la modulation permettant de maximiser l'autoconsommation ou le service réseau. Plus généralement, la modulation électrique optimale est fonction des objectifs fixés au procédé de pilotage. La détermination d'une modulation électrique optimale est connue de l'homme du métier et ne sera donc pas détaillée ici. Le lecteur intéressé pourra par exemple se reporter au problème dit « du sacs à dos» ou « *Knapsack problem* » en anglais, et notamment au document « A dynamic programming method with lists for the knapsack sharing problem », V. Boyer, D. El Baz, M. Elkihel, Computers & Industrial Engineering, Volume 61, Issue 2, Pages 274-278, 2011. La difficulté ne réside donc pas dans la détermination de cette modulation électrique, mais dans la répartition de cette modulation. Dans la suite, la modulation électrique optimale à l'instant k sera notée Mod(k).

Dans un mode de réalisation, l'étape 2E2 de détermination d'une consigne de puissance $P_c(i, k)$ à l'instant k comprend une sous-étape 2E22 de détermination d'une consigne de puissance optimale $P_c^{opt}(i, k)$ correspondant à la répartition de la modulation parmi chaque consommateur i, ladite répartition étant effectuée proportionnellement aux consignes minimales préférentielle. Autrement dit, la consigne de puissance optimale $P_c^{opt}(i, k)$ est donnée par

la formule suivante :

$$P_c^{opt}(i,k) = Mod(k) \frac{P_c^{min\_pref}(i,k)}{\sum_{i=1}^{I} P_c^{min\_pref}(i,k)}.$$

Dans certains cas, il peut être avantageux de ne pas répartir la modulation Mod(k) proportionnellement aux consignes minimales préférentielles, mais plutôt de sorte à prendre en compte la satisfaction de chaque consommateur i à l'instant k, notée S(i,k), ladite satisfaction S(i,k) étant par exemple égale à 1 lorsque la satisfaction est maximale et à 0 lorsque cette dernière est minimale. Afin de connaître cette satisfaction, il est possible de permettre à chaque personne associée à un consommateur d'évaluer sa satisfaction. De manière alternative, la satisfaction S(i, k) est fonction de la quantité d'eau chaude et/ou du nombre de personnes et/ou de la température de l'eau chaude dans le ballon. Dans un mode de réalisation, la satisfaction S(i,k) est déterminée à l'aide de la formule suivante :

$$S(i,k) = \left( T(i,k) - T_{opt}(i,k) \right)^2 \times Per(i,k)$$

où $T_{opt}(i, k)$ est une température optimale de l'eau chaude associée au consommateur i à l'instant k. Cette dernière peut par exemple être choisie par la ou les personnes associées audit consommateur $i$. De manière alternative, cette dernière peut être choisie comme étant égale à une valeur prédéfinie, par exemple 55°C.

La répartition est ensuite obtenue en déterminant, pour chaque consommateur $i$, la puissance optimale $P_c^{opt}(i,k)$ maximisant la satisfaction de service et l'efficacité de distribution de la puissance, c'est-à-dire maximisant la relation suivante :

$$\sum S(i,k) \times n(i,k)$$

où n(i,k) le rendement d'utilisation de la puissance est déterminé à l'aide de la formule suivante :

$$n(i,k) = \begin{cases} \frac{P_c^{opt}(i,k)}{P(i,k)} \text{ si } P(i,k) > 0 \\ 0 \text{ si } P(i,k) = 0 \end{cases}$$

Bien entendu, la maximisation est effectuée en s'assurant que l'inégalité $P(i,k) \geq P_c^{min\_pref}(i,k)$ est respectée pour chaque consommateur i. A l'issue de cette maximisation, chaque consommateur i est associé à une puissance de consigne optimale $P_c^{opt}(i,k)$ à l'instant k permettant d'optimiser la satisfaction de ce dernier.

Dans un mode de réalisation, l'étape 2E2 de détermination d'une consigne de puissance Pc(i, k) à l'instant k comprend une sous-étape 2E23 de détermination de la consigne de puissance Pc(i, k), ladite consigne de puissance Pc(i, k) à l'instant k étant le maximum entre la consigne de puissance optimale $P_c^{opt}(i,k)$ (qui correspond à la modulation répartie entre les différents consommateurs i) et la consigne minimale préférentielle $P_c^{min\_pref}(i,k)$. On s'assure ainsi que la consigne minimale préférentielle est toujours respectée.

Un troisième aspect de l'invention concerne un dispositif comprenant les moyens pour mettre en oeuvre un procédé 100 selon un premier aspect de l'invention. Dans un mode de réalisation, le dispositif comprend des moyens pour mesurer la consommation électrique P(i, k) d'un chauffe-eau ainsi que la température d'eau T(i, k) dudit chauffe-eau. Le dispositif comporte en outre un moyen de calcul (par exemple un processeur) associé à une mémoire (par exemple une mémoire RAM), ladite mémoire étant configurée pour stocker les instructions ainsi que les données nécessaires à l'exécution d'un procédé 100 selon un premier aspect de l'invention. Dans un mode de réalisation, le dispositif comporte également des moyens de communication (par exemple des moyens permettant d'établir une communication CPL) de sorte que ledit dispositif peut échanger des données avec un système de gestion distant.

Un quatrième aspect de l'invention concerne un système de pilotage comprenant les moyens pour mettre en oeuvre un procédé 200 selon un deuxième aspect de l'invention. Dans un mode de réalisation, le dispositif comporte un moyen de calcul (par exemple un processeur) associé à une mémoire (par exemple une mémoire RAM), ladite mémoire étant configurée pour stocker les instructions ainsi que les données nécessaires à l'exécution d'un procédé 200 selon un deuxième aspect de l'invention. Dans un mode de réalisation, le dispositif comporte également des moyens de communication (par exemple des moyens permettant d'établir une communication CPL) de sorte que ledit système peut échanger des données avec un ou plusieurs dispositifs distants, chaque dispositif distant correspondant à un consommateur.

## Revendications

1. Procédé (100) de détermination d'une consigne minimale préférentielle de puissance par un consommateur i, ledit consommateur comprenant un chauffe-eau électrique, ledit procédé comprenant :

   - une étape (1E1) de détermination de l'état du consommateur i à un instant k ;

   - une étape (1E2) de détermination d'une consigne minimale de puissance $P_c^{min}(i, k)$ à l'instant k en fonction de l'état du consommateur i déterminé lors de l'étape (1E1) de détermination de l'état du consommateur i à un instant k ;

   - une étape (1 E3) de détermination d'une consigne minimale de puissance $P_c^{min}(i, k + 1 : K)$ aux instants k + 1 à K, avec K le nombre total de plages de temps durant une période de production/consommation, en fonction d'un état du consommateur i prévisionnel estimé à partir de l'état du consommateur i déterminé lors de l'étape (1E1) de détermination de l'état du consommateur i à un instant k ;

   - une étape (1 E4) de détermination d'une consigne minimale préférentielle de puissance $P_c^{min\_pref}(i, k)$ en fonction de la consigne minimale de puissance $P_c^{min}(i, k)$ à l'instant k et de la consigne minimale de puissance $P_c^{min}(i, k + 1 : K)$ aux instants k + 1 à K.

2. Procédé (100) selon la revendication précédente **caractérisé en ce que** l'étape (1E1) de détermination de l'état du consommateur i à l'instant k comprend :

   - une sous-étape (1E11) d'acquisition de la puissance P(i, k) consommée par le chauffe-eau du consommateur i à l'instant k ;
   - une sous-étape (1E12) de détermination du nombre de personnes Per(i, k) à l'instant k associé audit consommateur i.

3. Procédé (100) selon la revendication 2 **caractérisé en ce que** l'étape (1E2) de détermination de la consigne minimale de puissance $P_c^{min}(i, k)$ à l'instant k comprend :

   - une sous-étape (1 E21) de détermination de la quantité d'eau chaude minimale $Eau_{min}(i, 1 : k)$ nécessaire à l'instant k en fonction du nombre de personnes Per(i, k) associé au consommateur i ;
   - une sous-étape (1E22) de détermination d'une consigne minimale de puissance $P_c^{min}(i, k)$ à l'instant k en fonction de la quantité d'eau chaude $Eau_{min}(i, 1 : k)$ nécessaire à l'instant k déterminée à la sous-étape (1E21) précédente.

4. Procédé (100) selon la revendication précédente **caractérisé en ce que** l'étape (1 E3) de détermination de la consigne minimale de puissance $P_c^{min}(i, k + 1 : K)$ aux instants k + 1 à K comprend :

   - une sous-étape (1E31) de détermination de la quantité d'eau chaude prévisionnel $Eau^{prev}(i, k + 1 : K)$ consommée aux instants k + 1 à K en fonction d'un nombre de personnes associé audit consommateur i Per$^{+1}$(i, k+ 1, K) dans lequel Per$^{+1}$(i, k) = min(Per(i, k) + 1, N$_i$) avec N$_i$ le nombre maximal de personnes associé audit consommateur i ;

- une sous-étape (1E32) de détermination de la consigne minimale de puissance $P_c^{min}(i, k + 1: K)$ aux instants k + 1 à *K* en fonction de la quantité d'eau chaude prévisionnel $Eau^{prev}(i, k + 1: K)$ déterminée lors de la sous-étape (1E31) précédente.

**5.** Procédé (200) de pilotage d'une pluralité de chauffe-eaux sur un réseau comportant une pluralité de consommateurs i, chaque consommateur i de la pluralité de consommateurs i comprenant un chauffe-eau de la pluralité de chauffe-eaux, ledit procédé comprenant :

- pour chaque consommateur i de la pluralité de consommateurs i, une étape (2E0) de mise en oeuvre d'un procédé (100) selon l'une des revendications 1 à 4 de sorte à obtenir, pour chaque consommateur i, une consigne minimale préférentielle de puissance $P_c^{min\_pref}(i, k)$ ;

- une étape (2E1) de réception, pour chaque consommateur i de la pluralité de consommateurs i, d'une consigne minimale préférentielle de puissance $P_c^{min\_pref}(i, k)$ ;

- pour chaque consommateur i de la pluralité de consommateurs i, une étape (2E2) de détermination d'une consigne de puissance P$_c$(i,k) à l'instant k en fonction de la consigne minimale préférentielle de puissance $P_c^{min\_pref}(i, k)$.

**6.** Procédé (200) selon la revendication précédente **caractérisé en ce que** l'étape (2E2) de détermination d'une consigne de puissance P$_c$(i, k) à l'instant k comprend :

- une sous-étape (2E21) de détermination de la modulation électrique optimale à l'instant k ;

- une sous-étape (2E22) de détermination d'une consigne de puissance optimale $P_c^{opt}(i, k)$ correspondant à la répartition de la modulation parmi chaque consommateur i, ladite répartition étant effectuée proportionnellement aux consignes minimales préférentielle $P_c^{min\_pref}(i, k)$ ;

- une sous-étape (2E23) de détermination de la consigne de puissance P$_c$(i, k), ladite consigne de puissance P$_c$(i, k) à l'instant k étant égale au maximum entre la consigne de puissance optimale $P_c^{opt}(i, k)$ et la consigne minimale préférentielle $P_c^{min\_pref}(i, k)$.

**7.** Procédé (200) selon la revendication 5 **caractérisé en ce que** l'étape (2E2) de détermination d'une consigne de puissance P$_c$(i,k) à l'instant k comprend :

- une sous-étape (2E21) de détermination de la modulation électrique optimale à l'instant k ;

- une sous-étape (2E22') de détermination d'une consigne de puissance optimale $P_c^{opt}(i, k)$ correspondant à la maximisation de la relation suivante :

$$\sum S(i, k) \times n(i, k)$$

où S(i,k) est la satisfaction du consommateur i à l'instant k avec S = 1 lorsque la satisfaction est maximale et S = 0 lorsque la satisfaction est minimale et n(i,k) le rendement d'utilisation de la puissance déterminé à l'aide de la formule suivante :

$$n(i, k) = \begin{cases} \dfrac{P_c^{opt}(i, k)}{P(i, k)} & si\ P(i, k) > 0 \\ 0 & si\ P(i, k) = 0 \end{cases}$$

- une sous-étape (2E23) de détermination de la consigne de puissance $P_c(i, k)$, ladite consigne de puissance $P_c(i, k)$ à l'instant k étant égale au maximum entre la consigne de puissance optimale $P_c^{opt}(i, k)$ et la consigne minimale préférentielle $P_c^{min\_pref}(i, k)$.

8. Dispositif comprenant des moyens pour mettre en oeuvre un procédé (100,200) selon l'une des revendications précédentes.

9. Programme d'ordinateur comprenant des instructions qui conduisent le dispositif selon la revendication précédente à exécuter les étapes du procédé (100,200) selon l'une des revendications 1 à 7.

10. Support lisible par ordinateur, sur lequel est enregistré le programme d'ordinateur selon la revendication précédente.

**Patentansprüche**

1. Bestimmungsverfahren (10) eines bevorzugten Mindest-Sollwertes einer Leistung durch einen Verbraucher i, wobei der genannte Verbraucher einen elektrischen Heißwasserbehälter umfasst, wobei das genannte Verfahren umfasst:

   - einen Bestimmungsschritt (1E1) des Zustandes des Verbrauchers i zu einem Zeitpunkt k;
   - einen Bestimmungsschritt (1E2) eines Mindest-Sollwertes einer Leistung $P_c^{min}(i, k)$ zum Zeitpunkt k in Abhängigkeit von dem Zustand des Verbrauchers i, der beim Bestimmungsschritt (1E1) des Zustandes des Verbrauchers i zu einem Zeitpunkt k bestimmt wird:
   - einen Bestimmungsschritt (1 E3) eines Mindest-Sollwertes einer Leistung $P_c^{min}(i, k + 1: k)$ zu den Zeitpunkten k + 1 bis K, wobei *K* die Gesamtzahl von Zeitbereichen während einer Produktions-/Verbrauchsperiode ist, in Abhängigkeit von einem voraussichtlichen Zustand des Verbrauchers i, der ausgehend von dem Zustand des Verbrauchers i geschätzt wird, der beim Bestimmungsschritt (1E1) des Zustandes des Verbrauchers i zu einem Zeitpunkt k bestimmt wird;
   - einen Bestimmungsschritt (1E4) eines bevorzugten Mindest-Sollwertes der Leistung $P_c^{min}(i, k)$ in Abhängigkeit von dem Mindest-Sollwert einer Leistung $P_c^{min}(i, k)$ zum Zeitpunkt k und vom Mindest-Sollwert der Leistung $P_c^{min}(i, k + 1: K)$ zu den Zeitpunkten k + 1 bis K.

2. Verfahren (100) gemäß dem voranstehenden Anspruch, **dadurch gekennzeichnet, dass** der Bestimmungsschritt (1E1) des Zustandes des Verbrauchers i zum Zeitpunkt k umfasst:

   - einen Erwerbs-Teilschritt (1E1) der Leistung P(i, k), die vom Heißwasserbehälter des Verbrauchers i zum Zeitpunkt k verbraucht wird;
   - einen Bestimmungs-Teilschritt (1E2) der Anzahl von Personen Per(i, k) zum Zeitpunkt k, die dem genannten Verbraucher i zugeordnet wird.

3. Verfahren (100) gemäß Anspruch 2, **dadurch gekennzeichnet, dass** der Bestimmungsschritt (1E2) des Mindestsollwertes einer Leistung $P_c^{min}(i, k)$ zum Zeitpunkt k umfasst:

   - einen Bestimmungs-Teilschritt (1E2) der Mindestmenge an warmem Wasser $Eau_{min}(1, 1: k)$, die zum Zeitpunkt k in Abhängigkeit von der Anzahl von Personen Per(i, k) notwendig ist, die dem Verbraucher i zugeordnet wird;
   - einen Bestimmungs-Teilschritt (1E22) eines Mindest-Sollwertes einer Leistung $P_c^{min}(i, k)$ zum Zeitpunkt k in Abhängigkeit von der Menge an warmem Wasser $Eau_{min}(i, 1: k)$, die zum Zeitpunkt k notwendig ist, die im voranstehenden Teilschritt (1E2) bestimmt wird.

4. Verfahren (100) gemäß dem voranstehenden Anspruch, **dadurch gekennzeichnet, dass** der Bestimmungsschritt

12

(1 E3) des Mindest-Sollwertes einer Leistung $P_c^{min}(i, k + 1: K)$ zu den Zeitpunkten k + 1 bis K umfasst:

- einen Bestimmungs-Teilschritt (1E31) der voraussichtlichen Menge an warmem Wasser $Eau^{prev}(i, k + 1: k)$, die zu den Zeitpunkten k + 1 bis K in Abhängigkeit von einer Anzahl von Personen verbraucht wird, die dem genannten Verbraucher i $Per^{+1}(i, k + 1, K)$ zugeordnet wird, wobei $Per^{+1}(i, k) = min(Per (i, k) + 1, N_i)$ ist, wobei $N_i$ die maximale Anzahl von Personen ist, die dem genannten Verbraucher i zugeordnet wird;
- einen Bestimmungs-Teilschritt (1E32) des Mindest-Sollwertes einer Leistung $P_c^{min}(i, k + 1: K)$ zu den Zeitpunkten k + 1 bis K in Abhängigkeit von der voraussichtlichen Menge an warmem Wasser $Eau^{prev}(i, k + 1: K)$, die beim voranstehenden Teilschritt (1E31) bestimmt wird.

5. Steuerverfahren (200) einer Vielzahl von Heißwasserbehältern in einem Netz, umfassend eine Vielzahl von Verbrauchern i, wobei jeder Verbraucher i der Vielzahl von Verbrauchern i einen Heißwasserbehälter der Vielzahl von Heißwasserbehältern umfasst, wobei das genannte Verfahren umfasst:

- für jeden Verbraucher i der Vielzahl von Verbrauchern i einen Umsetzungsschritt (2E0) eines Verfahrens (100) gemäß einem der Ansprüche 1 bis 4 derart, dass für jeden Verbraucher i ein bevorzugter Mindest-Sollwert einer Leistung $P_c^{min\_pref}(i, k)$ erhalten wird;
- einen Empfangsschritt (2E1) eines bevorzugten Mindest-Sollwertes einer Leistung $P_c^{min\_pref}(i, k)$ für jeden Verbraucher i der Vielzahl von Verbrauchern i;
- für jeden Verbraucher i der Vielzahl von Verbrauchern i einen Bestimmungsschritt (2E2) eines Leistungs-Sollwertes $P_c(i, k)$ zum Zeitpunkt k in Abhängigkeit von dem bevorzugten Mindest-Sollwert einer Leistung $P_c^{min\_pref}(i, k)$.

6. Verfahren (200) gemäß dem voranstehenden Anspruch, **dadurch gekennzeichnet, dass** der Bestimmungsschritt (2E2) eines Leistungs-Sollwertes $P_c(i, k)$ zum Zeitpunkt k umfasst:

- einen Bestimmungs-Teilschritt (3E1) der optimalen elektrischen Modulation zum Zeitpunkt k;
- einen Bestimmungs-Teilschritt (2E22) eines Sollwertes einer optimalen Leistung $P_c^{opt}(i, k)$, der der Verteilung der Modulation zwischen jedem Verbraucher i entspricht, wobei die genannte Verteilung proportional zu den genannten bevorzugten Mindest-Sollwerten $P_c^{min\_pref}(i, k)$ durchgeführt wird;
- einen Bestimmungs-Teilschritt (2E23) des Leistungs-Sollwertes $P_c(i, k)$, wobei der genannte Leistungs-Sollwert $P_c(i, k)$ zum Zeitpunkt k gleich dem Maximum zwischen dem Sollwert der optimalen Leistung $P_c^{opt}(i, k)$ und dem bevorzugten Mindest-Sollwert $Pc^{min-pref}(i, k)$ liegt.

7. Verfahren (200) gemäß Anspruch 5, **dadurch gekennzeichnet, dass** der Bestimmungsschritt (2E2) eines Leistungs-Sollwertes $P_c(i, k)$ zum Zeitpunkt k umfasst:

- einen Bestimmungs-Teilschritt (2E21) der optimalen elektrischen Modulation zum Zeitpunkt k;
- einen Bestimmungs-Teilschritt (2E22') eines Sollwertes einer optimalen Leistung $P_c^{opt}(i, k)$, der der Maximierung der folgenden Relation entspricht:

$$\Sigma\, S\,(i,\, k) \times n\,(i,\, k)$$

wobei S(i, k) die Befriedigung des Verbrauchers i zum Zeitpunkt k ist, wobei S = 1, wenn die Befriedigung maximal ist und S = 0, wenn die Befriedigung minimal ist und n(i, k) der Nutzungsertrag der Leistung ist, der mithilfe der folgenden Formel bestimmt wird:

$$n(i,k) = \begin{cases} \dfrac{P_c^{opt}(i,k)}{P(i,k)} & si\ P(i,k) > 0 \\ 0 & si\ P(i,k) = 0 \end{cases}$$

- einen Bestimmungs-Teilschritt (2E23) des Leistungs-Sollwertes $P_c(i, k)$, wobei der genannte Leistungs-Sollwert $P_c(i, k)$ zum Zeitpunkt k gleich dem Maximum zwischen dem Sollwert einer optimalen Leistung $P_c^{opt}(i, k)$ und dem bevorzugten Mindest-Sollwert $P_c^{min\_pref}(i, k)$ ist.

8. Vorrichtung, umfassend Mittel zum Umsetzen eines Verfahrens (100, 200) gemäß einem der voranstehenden Ansprüche.

9. Computerprogramm, umfassend Anweisungen, die die Vorrichtung gemäß dem voranstehenden Anspruch zum Ausführen der Schritte des Verfahrens (100, 200) gemäß einem der Ansprüche 1 bis 7 anregen.

10. Per Computer lesbarer Träger, auf dem das Computerprogramm gemäß dem voranstehenden Anspruch gespeichert ist.

**Claims**

1. A method (100) for determining a preferential minimum power set point by a consumer i, said consumer comprising an electric water heater, said method comprising:

   - a step (1E1) of determining the state of the consumer i at an instant k;

   - a step (1E2) of determining a minimum power set point $\mathrm{P}_c^{min}(i,k)$ at the instant k as a function of the state of the consumer i determined during the step (1E1) of determining the state of the consumer i at an instant k;

   - a step (1E3) of determining a minimum power set point $\mathrm{P}_c^{min}(i, k+1:K)$ at the instants k + 1 to $K$, $K$ being the total number of time ranges during a production/consumption period, as a function of the predicted state of the consumer i estimated from the state of the consumer i determined during step(1E1) of determining the state of the consumer i at an instant k;

   - a step (1E4) of determining a preferential minimum power set point $\mathrm{P}_c^{min\_pref}(i,k)$ as a function of the minimum power set point $\mathrm{P}_c^{min}(i,k)$ at the instant k and of the minimum power set point $\mathrm{P}_c^{min}(i, k+1:K)$ at the instants k +1 to K.

2. The method (100) according to the previous claim, **characterised in that** the step(1E1) of determining the state of the consumer i at the instant k comprises:

   - a sub-step (1E11) of acquiring the power P(i, k) consumed by the water heater of the consumer i at the instant k;
   - a sub-step (1E12) of determining the number of persons Per(i,k) at the instant k associated with said consumer i .

3. The method (100) according to claim 2, **characterised in that** the step (1E2) of determining the minimum power set point $\mathrm{P}_c^{min}(i,k)$ at the instant k comprises:

   - a sub-step (1E21) of determining the minimum necessary amount of hot water Eau$_{min}$(i,1:k) at the instant k as a function of the number of persons Per(i,k) associated with the consumer i;

   - a sub-step (1E22) of determining a minimum power set point $\mathrm{P}_c^{min}(i,k)$ at the instant k as a function of the necessary amount of hot water Eau$_{min}$(i,1: k) at the instant k determined in the previous sub-step (1E21).

4. The method (100) according to the previous claim, **characterised in that** the step (1E3) of determining the minimum power set point $\mathrm{P}_c^{min}(i, k+1:K)$ at the instants k + 1 to K comprises:

   - a sub-step (1E31) of determining a predicted amount of hot water Eau$^{prev}$(i,k + 1: K) consumed at the instants k + 1 to $K$ as a function of a number of persons associated with said consumer i Per$^{+1}$(i, k + 1, K) in which Per$^{+1}$(i,k) = min(Per,(ik) + 1,N$_i$) with N$_i$ being the maximum number of persons associated with said consumer i;

   - a sub-step (1E32) of determining the minimum power set point $\mathrm{P}_c^{min}(i, k+1:K)$ at the instants k+ 1 to K as a function of the predicted amount of hot water Eau$^{prev}$(i,k+ 1: K) determined during the previous sub-step (1E31).

5. A method (200) for driving a plurality of water heaters on a network including a plurality of consumers i , each consumer i from the plurality of consumers i comprising a water heater from the plurality of water heaters, said method comprising:

- for each consumer i from the plurality of consumers i, a step (2E0) of implementing a method (100) according to one of claims 1 to 4 so as to obtain, for each consumer i, a preferential minimum power set point $P_c^{min\_pref}(i,k)$ ;

- a step (2E1) of receiving, for each consumer i from the plurality of consumers i, a preferential minimum power set point $P_c^{min\_pref}(i,k)$ ;

- for each consumer i from the plurality of consumers i, a step (2E2) of determining a power set point $P_c(i,k)$ at the instant k as a function of the preferential minimum power set point $P_c^{min\_pref}(i,k)$ .

6. The method (200) according to the previous claim, **characterised in that** the step (2E2) of determining a power set point $P_c(i,k)$ at the instant k comprises:

- a sub-step (2E21) of determining the optimum electric modulation at the instant k;
- a sub-step (2E22) of determining an optimum power set point $P_c^{opt}(i, k)$ corresponding to the modulation distribution among each consumer i, said distribution being performed in proportion to the preferential minimum set points $P_c^{min\_pref}(i,k)$ ;
- a sub-step (2E23) of determining the power set point $P_c(i,k)$, said power set point $P_c(i,k)$ at the instant k being equal to the maximum among the optimum power set point $P_c^{opt}(i,k)$ and the preferential minimum set point $P_c^{min\_pref}(i,k)$ .

7. The method (200) according to claim 5, **characterised in that** the step (2E2) of determining a power set point $P_c(i,k)$ at the instant k comprises:

- a sub-step (2E21) of determining the optimum electric modulation at the instant k;
- a sub-step (2E22') of determining an optimum power set point $P_c^{opt}(i,k)$ corresponding to the maximisation of the following relationship:

$$\sum S(i,k) \times n(i,k)$$

where s(i, k) is the satisfaction of consumer i at the instant k with s = 1 when the satisfaction is maximum and S = 0 when the satisfaction is minimum and n(i,k) the efficacy of power use determined using the following formula:

$$n(i,k) = \begin{cases} \dfrac{P_c^{opt}(i,k)}{P(i,k)} & \text{si } P(i,k) > 0 \\ 0 & \text{si } P(i,k) = 0 \end{cases}$$

- a sub-step (2E23) of determining the power set point $P_c(i,k)$, said power set point $P_c(i,k)$ at the instant k being equal to the maximum among the optimum power set point $P_c^{opt}(i,k)$ and the preferential minimum set point $P_c^{min\_pref}(i,k)$ .

8. A device comprising means for implementing a method (100, 200) according to one of the previous claims.

9. A computer program comprising instructions which cause the device according to the previous claim to carry out the steps of the method (100, 200) according to one of claims 1 to 7.

10. A computer readable medium, on which the computer program according to the previous claim is recorded.

[Fig. 1]

[Fig. 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3033394 A1

- WO 2014055059 A

**Littérature non-brevet citée dans la description**

- **ELAMARI et al.** Using Electric Water Heaters (EWHs) for Power Balancing and Frequency Control in PV-Diesel Hybrid Mini-GridsK. *World Energy Renewable Congress,* 2011

- **V. BOYER ; D. EL BAZ ; M. ELKIHEL.** A dynamic programming method with lists for the knapsack sharing problem. *Computers & Industrial Engineering,* 2011, vol. 61 (2), 274-278